# FASCICULE DE BREVET EUROPEEN

(11) **EP 3 043 685 B1**
(45) Date de publication et mention de la délivrance du brevet: **10.04.2019**
(21) Numéro de dépôt: 14777692.6
(22) Date de dépôt: 03.09.2014
(51) Int. Cl.: A47J 43/07, B26D 1/43, B26D 3/28, A47J 19/02

(54) **PROCEDE D'EXTRACTION DE JUS ET/OU DE COULIS, ET DISPOSITIF METTANT EN OEUVRE UN TEL PROCEDE**
VERFAHREN ZUR EXTRAKTION VON SAFT UND/ODER PÜREE UND VORRICHTUNG ZUR DURCHFÜHRUNG DIESES VERFAHRENS
METHOD FOR EXTRACTING JUICE AND/OR COULIS, AND DEVICE IMPLEMENTING SUCH A METHOD

(30) Priorité: 09.09.2013 FR 1358661
(43) Date de publication de la demande: 20.07.2016
(73) Titulaire: SEB S.A., 69130 Ecully (FR)
(72) Inventeur: LAFOND, Jean-Marie, 65420 Ibos (FR); PEYRAS, Lionel, 65100 Lourdes (FR)
(74) Mandataire: Bourrières, Patrice
(86) Numéro de dépôt international: PCT/FR2014/052170
(87) Numéro de publication internationale: WO 2015/033056

(56) Documents cités:
- EP-A1- 1 731 062
- EP-A1- 2 522 259
- WO-A1-2012/173333
- CN-A- 103 156 539
- US-A- 5 495 795
- US-A- 5 906 154

## Description

La présente invention concerne le domaine technique des procédés et des dispositifs d'extraction de jus et/ou de coulis d'aliments.

La présente invention concerne plus particulièrement, mais non exclusivement, les accessoires et les appareils électroménagers de préparation culinaire mettant en oeuvre un tel procédé.

Plusieurs principes d'extraction de jus sont connus. Dans les appareils de type centrifugeuses, les aliments sont broyés au fond d'un panier tournant à grande vitesse. Les jus sont séparés par les parois filtrantes relevées du panier, alors que le reste de l'aliment broyé est éjecté au dessus des parois du panier. De tels appareils présentent l'inconvénient de favoriser l'oxydation des aliments broyés. De plus ces appareils peuvent être fastidieux à nettoyer. En outre ces appareils sont peu adaptés à l'obtention de jus épais ou de coulis. Dans les appareils de type pressoir à vis, les aliments sont progressivement déchiquetés entre une vis de pressage et un fourreau. Des appareils de ce type sont connus des documents EP2522259, WO2012173333, US5906154. Des jus plus ou moins pulpeux peuvent être obtenus. Toutefois le montage de tels appareils peut être fastidieux. De plus les différents appareils précités sont spécialisés dans l'obtention de jus et/ou de coulis.

Un objet de la présente invention est de proposer un procédé d'extraction de jus et/ou de coulis d'aliments, qui soit simple à mettre en oeuvre.

Un objet de la présente invention est de proposer un procédé d'extraction de jus et/ou de coulis d'aliments, qui présente un bon rendement d'extraction.

Un objet de la présente invention est de proposer un procédé d'extraction de jus et/ou de coulis d'aliments, qui permette une conception compacte.

Un autre objet de la présente invention est de proposer un procédé d'extraction de jus et/ou de coulis d'aliments, qui puisse être utilisé partiellement pour réaliser d'autres types de préparation d'aliments.

Un objet de la présente invention est de proposer un dispositif d'extraction de jus et/ou de coulis d'aliments, qui soit simple à utiliser.

Un objet de la présente invention est de proposer un dispositif d'extraction de jus et/ou de coulis d'aliments, qui permette un bon rendement d'extraction.

Un objet de la présente invention est de proposer un dispositif d'extraction de jus et/ou de coulis d'aliments, qui permette une construction compacte.

Un autre objet de la présente invention est de proposer un dispositif d'extraction de jus et/ou de coulis d'aliments, qui puisse être utilisé dans une configuration simplifiée pour réaliser d'autres types de préparation d'aliments.

Ces objets sont atteints avec un procédé d'extraction de jus et/ou de coulis d'aliments, comprenant les étapes suivantes :
- une étape de fragmentation consistant à râper ou effiler des aliments avec un outil de découpe animé d'un mouvement de rotation et/ou d'un mouvement alternatif, l'outil de découpe comportant une face de coupe présentant plusieurs organes de découpe, l'outil de découpe présentant plusieurs passages traversants débouchant dans une chambre de réception, pour évacuer les morceaux d'aliments découpés dans la chambre de réception, chacun des organes de découpe étant adjacent à un des passages traversants,
- une étape ultérieure de pressage des morceaux d'aliments découpés entre un organe de pressage et une paroi filtrante agencés dans la chambre de réception, l'organe de pressage et la paroi filtrante étant animés d'un mouvement relatif de rotation et/ou d'un mouvement relatif alternatif, pour extraire du jus et/ou du coulis à partir des morceaux d'aliments découpés.

L'étape de fragmentation permet ainsi de découper simultanément plusieurs morceaux de l'aliment. Des filaments ou des bâtonnets peuvent notamment être obtenus lorsque l'aliment est suffisamment consistant, sinon l'aliment est progressivement fragmenté en petits morceaux pouvant présenter une consistance plus ou moins solide. Ces morceaux d'aliments découpés sont recueillis dans la chambre de réception. Les morceaux d'aliments découpés sont ainsi séparés de l'aliment non encore découpé par l'outil de découpe. L'étape ultérieure de pressage utilise les morceaux d'aliments découpés ainsi recueillis pour extraire du jus et/ou du coulis. Ce procédé permet d'obtenir des jus et/ou des coulis de manière simple, en utilisant une étape de fragmentation qui peut être similaire à celle utilisée pour râper ou effiler des aliments. Les morceaux d'aliments découpés lors de l'étape de fragmentation peuvent être plus ou moins gros, selon le calibre des passages traversants de l'outil de découpe. Avec des aliments suffisamment juteux ou pulpeux, les morceaux d'aliments préalablement découpés sont aisément pressés, au fur et à mesure de leur découpe. Un bon rendement de pressage peut ainsi être obtenu.

Avantageusement, le procédé d'extraction de jus et/ou de coulis d'aliments consiste aussi à utiliser une enceinte de travail contenant l'outil de découpe, l'organe de pressage et la paroi filtrante, pour confiner les morceaux d'aliments découpés avant l'étape ultérieure de pressage, l'enceinte de travail présentant une ouverture d'alimentation débouchant en regard de l'outil de découpe, ainsi qu'une sortie d'écoulement agencée en aval de la paroi filtrante. Les jus et/ou les coulis issus de la paroi filtrante peuvent ainsi être collectés dans l'enceinte de travail et s'écouler vers la sortie d'écoulement. Cette disposition permet d'obtenir un débit de pressage important en évitant les projections non contrôlées de jus et/ou de coulis.

Avantageusement encore, le procédé d'extraction de jus et/ou de coulis d'aliments consiste à utiliser un tambour de découpe animé d'un mouvement de rotation pour réaliser l'étape de fragmentation, le tambour de découpe comportant plusieurs organes de découpe adjacents chacun à un des passages traversants, pour recevoir les morceaux d'aliments découpés à l'intérieur du tambour de découpe. Cette disposition permet une conception compacte avec des parties rotatives de diamètre réduit.

Avantageusement alors, le procédé d'extraction de jus et/ou de coulis d'aliments consiste également à utiliser un organe de raclage agencé au moins partiellement à l'intérieur du tambour de découpe, pour diriger au moins une partie des morceaux d'aliments découpés vers l'organe de pressage. Cette disposition permet d'améliorer le débit et le rendement de pressage.

Avantageusement encore, le procédé d'extraction de jus et/ou de coulis d'aliments consiste à agencer l'organe de pressage en aval d'une ouverture de déversement du tambour de découpe. Cette disposition permet de simplifier le transfert des morceaux d'aliments découpés vers l'organe de pressage.

Selon une forme de réalisation, le procédé d'extraction de jus et/ou de coulis d'aliments consiste à utiliser au moins une pale de pressage animée d'un mouvement relatif de rotation et/ou d'un mouvement relatif alternatif par rapport à la paroi filtrante pour réaliser l'étape ultérieure de pressage en pressant les morceaux d'aliments découpés contre la paroi filtrante et extraire du jus et/ou du coulis.

Selon une forme de réalisation préférée, la pale de pressage est agencée au moins partiellement à l'intérieur d'un tambour de filtration.

Avantageusement encore, le procédé d'extraction de jus et/ou de coulis d'aliments consiste à entraîner de manière synchrone l'outil de découpe et l'organe de pressage. Cette disposition permet de simplifier la mise en oeuvre du procédé d'extraction de jus et/ou de coulis d'aliments.

Ces objets sont atteints également avec un dispositif d'extraction de jus et/ou de coulis d'aliments, comportant :
- une ouverture d'alimentation, pour introduire les aliments à transformer,
- un outil de découpe animé d'un mouvement de rotation et/ou d'un mouvement alternatif, comportant une face de coupe présentant des organes de découpe adjacents chacun à un passage traversant, plusieurs organes de découpe évoluant simultanément en regard de l'ouverture d'alimentation, les passages traversants débouchant dans une chambre de réception, pour recueillir les morceaux d'aliments découpés,
- une paroi filtrante délimitant au moins partiellement la chambre de réception,
- un organe de pressage agencé dans la chambre de réception en regard de la paroi filtrante, l'organe de pressage et la paroi filtrante étant animés d'un mouvement relatif de rotation et/ou d'un mouvement relatif alternatif, pour presser les morceaux d'aliments découpés contre la paroi filtrante et extraire du jus et/ou du coulis.

Ces dispositions permettent d'obtenir un bon rendement d'extraction, avec une construction compacte et simple à utiliser. Les morceaux d'aliments découpés par l'outil de découpe peuvent être plus facilement pressés entre l'organe de pressage et la paroi filtrante.

Avantageusement, la paroi filtrante s'étend au moins dans une partie inférieure de la chambre de réception. Cette disposition permet de simplifier l'évacuation des jus et/ou des coulis obtenus.

Selon une forme de réalisation, l'organe de pressage comporte au moins une pale de pressage pour presser les morceaux d'aliments découpés contre la paroi filtrante, pour obtenir des jus et/ou des coulis. En alternative, l'organe de pressage pourrait comporter au moins une portion de filet de vis de pressage pour presser les morceaux d'aliments découpés contre la paroi filtrante.

Avantageusement alors, l'organe de pressage et la paroi filtrante sont animés d'un mouvement relatif de rotation, et la paroi filtrante s'étend de manière circonférentielle autour de l'organe de pressage. Cette disposition permet d'augmenter le débit et le rendement d'extraction des jus et/ou des coulis.

Avantageusement encore, l'outil de découpe est animé d'un mouvement de rotation et forme un tambour de découpe vers au moins une portion de la paroi filtrante. Cette disposition permet d'obtenir une construction compacte et de simplifier l'alimentation de l'organe de pressage en morceaux d'aliments découpés.

Avantageusement alors, le dispositif d'extraction de jus et/ou de coulis d'aliments comporte un organe de raclage s'étendant à l'intérieur du tambour de découpe. Cette disposition contribue à augmenter le débit et le rendement d'extraction des jus et/ou des coulis.

Avantageusement encore, l'ouverture d'alimentation est ménagée dans une cheminée et le dispositif d'extraction de jus et/ou de coulis d'aliments comporte un poussoir monté mobile dans la cheminée. Cette disposition contribue à augmenter le débit et le rendement de découpe des aliments. Avantageusement encore, le dispositif d'extraction de jus et/ou de coulis d'aliments est spécialement conçu pour la mise en oeuvre du procédé précité.

L'invention sera mieux comprise à l'étude d'un exemple de réalisation, pris à titre nullement limitatif, illustré dans les figures annexées, dans lesquelles :
- les figures 1 et 2 sont respectivement une vue en coupe assemblée et une vue en perspective et en éclaté d'un exemple de réalisation d'un dispositif de préparation d'aliments mettant en oeuvre le procédé selon l'invention,
- la figure 3 est une vue en perspective d'un boîtier du dispositif de préparation d'aliments illustré sur les figures 1 et 2,
- la figure 4 est une vue en perspective d'un outil de découpe du dispositif de préparation d'aliments illustré sur les figures 1 et 2,
- la figure 5 est une vue en perspective d'un organe de pressage du dispositif de préparation d'aliments illustré sur les figures 1 et 2,
- la figure 6 est une vue en perspective d'un organe de filtration du dispositif de préparation d'aliments illustré sur les figures 1 et 2,
- la figure 7 est une vue en perspective d'un déflecteur du dispositif de préparation d'aliments illustré sur les figures 1 et 2.

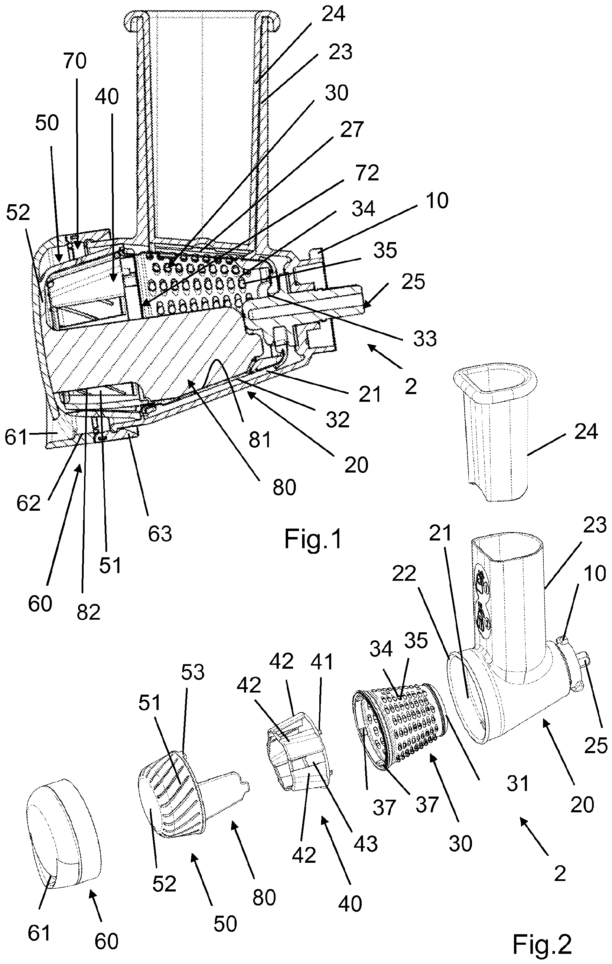

Le dispositif d'extraction de jus et/ou de coulis d'aliments 2 illustré sur les figures 1 à 7 comporte des moyens de fixation 10 prévus pour venir en prise avec des moyens de fixation complémentaires appartenant à une base motorisée (non représentée sur les figures). Le dispositif d'extraction de jus et/ou de coulis d'aliments 2 est ainsi amovible par rapport à la base motorisée. Le dispositif d'extraction de jus et/ou de coulis d'aliments 2 comporte également un organe de transmission 25 prévu pour venir en prise avec une sortie d'entraînement de la base motorisée. A titre de variante, le dispositif d'extraction de jus et/ou de coulis d'aliments 2 peut comporter au moins un moteur électrique pour entraîner en rotation et/ou de manière alternative au moins un outil de travail.

Le dispositif d'extraction de jus et/ou de coulis d'aliments 2 comporte une ouverture d'alimentation 27 pour introduire les aliments à transformer. L'ouverture d'alimentation 27 est ménagée dans un boîtier 20 et communique avec un logement 21. Selon la forme de réalisation illustrée sur les figures, l'ouverture d'alimentation 27 est ménagée dans une cheminée 23 débouchant dans le logement 21. La cheminée 23 forme un conduit d'alimentation. Le dispositif d'extraction de jus et/ou de coulis d'aliments 2 comporte avantageusement un poussoir 24 monté mobile dans la cheminée 23. Le boîtier 20 porte l'organe de transmission 25.

Le dispositif d'extraction de jus et/ou de coulis d'aliments 2 comporte un outil de découpe 30. Selon la forme de réalisation illustrée sur les figures, l'outil de découpe 30 est animé d'un mouvement de rotation. A cet effet, l'outil de découpe 30 comporte un moyen d'entraînement en rotation 33 venant en prise avec une extrémité de l'organe de transmission 25 s'étendant dans le logement 21, tel que visible sur la figure 1. De préférence le moyen d'entraînement en rotation 33 forme également un moyen d'accouplement avec l'organe de transmission 25.

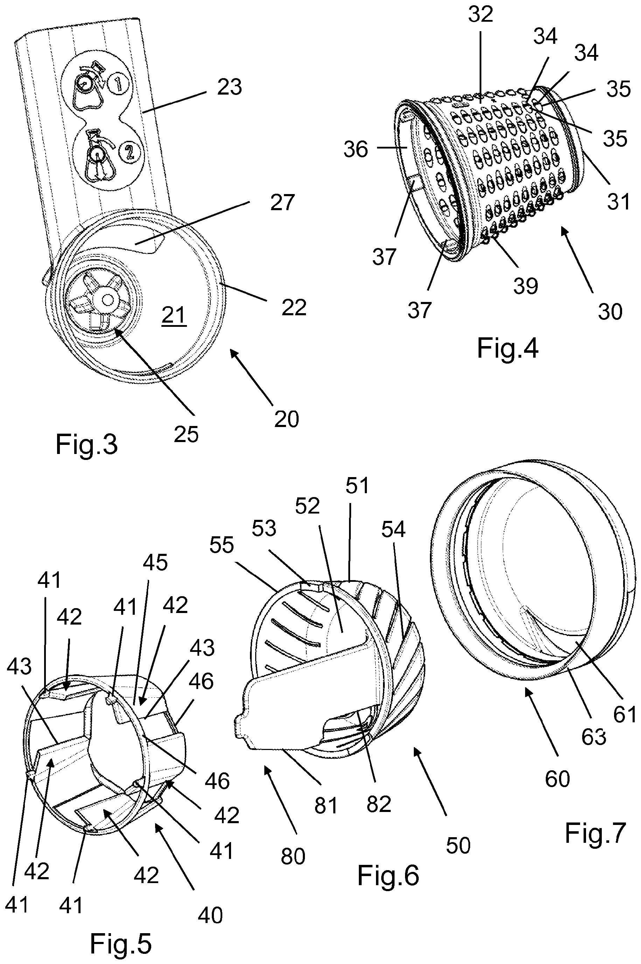

Tel que mieux visible sur les figures 2 et 3, le logement 21 présente une ouverture de montage 22 pour la mise en place de l'outil de découpe 30. La cheminée 23 communique avec le logement 21.

L'outil de découpe 30 comporte une face de coupe 32 présentant plusieurs organes de découpe 34, mieux visibles sur la figure 4. Lorsque l'outil de découpe 30 est entraîné, la face de coupe 32 évolue au moins partiellement en regard de l'ouverture d'alimentation 27, pour fragmenter les aliments en morceaux d'aliments découpés. Chacun des organes de découpe 34 est adjacent à un passage traversant 35, pour évacuer les morceaux d'aliments découpés. En d'autres termes, les organes de découpe 34 sont adjacents chacun à un des passages traversants 35, tel que visible sur les figures 1, 2 et 4. Les passages traversants 35 débouchent dans une chambre de réception 72, pour recueillir les morceaux d'aliments découpés. Ainsi la face de l'outil de découpe 30 opposée à la face de coupe 32 délimite en partie la chambre de réception 72. Tel que bien visible sur les figures 2 et 4, les organes de découpe 34 sont proéminents par rapport à la face de coupe 32.
Plusieurs organes de découpe 34 évoluent simultanément en regard de l'ouverture d'alimentation 27, pour découper seulement une portion de la largeur de l'aliment présent dans l'ouverture d'alimentation 27, la largeur de l'aliment étant définie perpendiculairement au mouvement de l'outil de découpe 30 par rapport à l'ouverture d'alimentation 27.

Si désiré, les organes de découpe 34 peuvent être alignés selon plusieurs rangées. Avantageusement, plusieurs rangées d'organes de découpe 34 évoluent simultanément en regard de l'ouverture d'alimentation 27. De préférence, les organes de découpe 34 de deux rangées adjacentes étant décalés pour couvrir de manière homogène la face de coupe 32.

Les organes de découpe 34 de l'outil de découpe 30 représenté sur les figures 1, 2 et 4 sont conformés pour réaliser des préparations de type râpé. Les passages traversants 35 sont avantageusement arrondis, voire circulaires.

En alternative, les organes de découpe 34 de l'outil de découpe 30 peuvent être conformés pour réaliser des préparations de type effilé. L'outil de découpe 30 peut notamment présenter des organes de découpe 34 de type coupe-frites, pour découper les aliments en bâtonnets, avec par exemple des éléments de coupe s'élevant au dessus d'une paroi inférieure de l'outil de découpe 30 et d'autres éléments de coupe disposés chacun au dessus de deux éléments de coupe adjacents, pour définir des passages traversants entre deux éléments de coupe adjacents et l'autre élément de coupe correspondant.

Lorsque l'outil de découpe 30 est animé d'un mouvement de rotation, l'ouverture d'alimentation 27 est de préférence agencée de manière décentrée par rapport à l'axe de rotation de l'outil de découpe 30, Ainsi les morceaux d'aliments découpés par les organes de coupe 34 sont plus aisément évacués par les passages traversants 35.

Selon la forme de réalisation préférée illustrée sur les figures, l'outil de découpe 30 forme un tambour de découpe 39 présentant une ouverture de déversement 36 délimitée par la face de coupe 32 s'étendant de manière circonférentielle. Le volume interne du tambour de découpe 39 délimite ainsi une partie de la chambre de réception 72. L'outil de découpe 30 présente une extrémité d'entraînement 31 comportant le moyen d'entraînement en rotation 33. L'extrémité d'entraînement 31 est reliée à la face de coupe 32 et est agencée à l'opposé de l'ouverture de déversement 36.

De manière avantageuse, le dispositif d'extraction de jus et/ou de coulis d'aliments 2 comporte un organe de raclage 80 s'étendant à l'intérieur du tambour de découpe 39.

Le dispositif d'extraction de jus et/ou de coulis d'aliments 2 comporte une paroi filtrante 51 perforée et/ou ajourée de manière à laisser passer le jus et si désiré au moins une partie de la pulpe, tout en retenant les morceaux d'aliments découpés non encore pressés, ainsi que les résidus de pressage. La paroi filtrante 51 délimite au moins partiellement la chambre de réception 72. La paroi filtrante 51 appartient à un organe de filtration 50. Plus particulièrement dans l'exemple de réalisation illustré sur les figures, l'organe de filtration 50 présente une bordure annulaire 55 montée dans l'ouverture de montage 22 du boîtier 20. Le tambour de découpe 39 est déversant vers au moins une portion de la paroi filtrante 51, plus particulièrement vers la partie inférieure de la paroi filtrante 51. A cet effet la partie inférieure de la face de coupe 32 est déversante vers l'ouverture de déversement 36.

Le dispositif d'extraction de jus et/ou de coulis d'aliments 2 comporte un organe de pressage 40 agencé dans la chambre de réception 72 en regard de la paroi filtrante 51. Plus particulièrement dans l'exemple de réalisation illustré sur les figures, l'organe de pressage 40 et la paroi filtrante 51 sont animés d'un mouvement relatif de rotation, pour presser les morceaux d'aliments découpés contre la paroi filtrante 51 et extraire du jus et/ou du coulis. L'organe de filtration 50 est bloqué en rotation par rapport au boîtier 20 et comporte à cet effet au moins une butée en rotation 53 retenue par le boîtier 20. L'organe de pressage 40 est entraîné en rotation par l'outil de découpe 30 et comporte à cet effet une série de languettes 41 entraînées par des butées d'entraînement en rotation 37 de l'outil de découpe 30. De plus les languettes 41 sont engagées à l'intérieur de l'outil de découpe 30. L'outil de découpe 30 porte ainsi l'organe de pressage 40.

Selon la forme de réalisation préférée illustrée sur les figures, la paroi filtrante 51 s'étend au moins dans une partie inférieure de la chambre de réception 72. De plus la paroi filtrante 51 s'étend de manière circonférentielle autour de l'organe de pressage 40. La paroi filtrante 51 forme ainsi un tambour d'extraction. A cet effet la paroi filtrante 51 entoure une paroi de fond 52 de l'organe de filtration 50. La paroi filtrante 51 comporte par exemple une série de fentes 54. A titre de variante, les fentes 54 ne sont pas nécessairement réparties régulièrement sur la paroi filtrante 51, et ne sont pas nécessairement inclinées par rapport à l'axe de rotation de l'organe de pressage 40. La paroi filtrante 51 ne comporte pas nécessairement des fentes et peut présenter notamment des perforations.

Selon la forme de réalisation illustrée sur les figures, l'organe de pressage 40 comporte au moins une pale de pressage 42 pour presser les morceaux d'aliments découpés contre au moins une portion de la paroi filtrante 51 de l'organe de filtration 50, pour obtenir des jus et/ou des coulis. De manière préférée, l'organe de pressage 40 comporte une série de pales de pressage 42. Les pales de pressage 42 sont réparties de manière circonférentielle. L'organe de pressage 40 forme ainsi un tambour de pressage. Des montants 46 relient deux pales de pressage 42 adjacentes. Les pales de pressage 42 de l'organe de pressage 40 sont conformées pour presser les morceaux d'aliments découpés contre la paroi filtrante 51 lors de la rotation de l'organe de pressage 40. Les pales de pressage 42 comportent un bord d'attaque 43 s'étendant à distance de la face interne de la paroi filtrante 51, pour collecter des morceaux d'aliments en vue de leur pressage, et une paroi de pressage 45 prolongeant le bord d'attaque 43 et se rapprochant de la face interne de la paroi filtrante 51 pour compléter l'extraction du jus.

Le dispositif d'extraction de jus et/ou de coulis d'aliments 2 illustré sur les figures comporte un déflecteur 60 portant l'organe de filtration 50. Le déflecteur 60 est monté sur le boîtier 20 autour de l'ouverture de montage 22. A cet effet le déflecteur 60 peut notamment comporter une paroi déformable 63. A titre de variante, le déflecteur 60 peut notamment être verrouillé par baïonnette sur le boîtier 20. Le déflecteur 60 entoure la paroi filtrante 51. Le déflecteur 60 comporte une sortie d'écoulement 61 disposée en aval de la paroi filtrante 51. Le déflecteur 60 présente une pente déversante 62 sous l'organe de filtration 50 en direction de la sortie d'écoulement 61. Ainsi la sortie d'écoulement 61 est alimentée par gravité par l'organe de filtration 50. L'outil de découpe 30 et l'organe de filtration 50 sont entourés par une enceinte de travail 70 comprenant le boîtier 20 et le déflecteur 60. L'enceinte de travail 70 présente ainsi l'ouverture d'alimentation 27 ainsi que la sortie d'écoulement 61. L'enceinte de travail 70 loge l'outil de découpe 30, l'organe de pressage 40 et la paroi filtrante 51.

De manière préférée, l'organe de raclage 80 présente une arête de raclage 81 agencée au dessus de la face interne de la face de coupe 32 de l'outil de découpe 30. L'organe de raclage 80 présente une échancrure 82 entre l'arête de raclage 81 et l'organe de filtration 50, pour ménager un passage pour les pales de pressage 42 de l'organe de pressage 40. Dans la forme de réalisation préférée illustrée sur les figures, l'organe de raclage 80 est porté par l'organe de filtration 50. Plus particulièrement, l'organe de raclage 80 est issu de la paroi de fond 52. L'organe de raclage 80 et l'organe de filtration 50 peuvent ainsi être réalisés en une seule pièce. En alternative, l'organe de raclage 80 peut par exemple être rapporté sur l'organe de filtration 50. A titre de variante, l'organe de raclage 80 pourrait notamment être porté par le déflecteur 60.

Le dispositif d'extraction de jus et/ou de coulis d'aliments 2 illustré sur les figures fonctionne selon un procédé d'extraction de jus et/ou de coulis d'aliments comprenant les étapes suivantes :
- une étape de fragmentation consistant à râper ou effiler des aliments avec l'outil de découpe 30 animé d'un mouvement de rotation et/ou d'un mouvement alternatif, l'outil de découpe 30 présentant plusieurs passages traversants 35 débouchant dans la chambre de réception 72, pour évacuer les morceaux d'aliments découpés dans la chambre de réception 72,
- une étape ultérieure de pressage des morceaux d'aliments découpés entre l'organe de pressage 40 et la paroi filtrante 51 agencés dans la chambre de réception 72, l'organe de pressage 40 et la paroi filtrante 51 étant animés d'un mouvement relatif de rotation et/ou d'un mouvement relatif alternatif, pour extraire du jus et/ou du coulis à partir des morceaux d'aliments découpés.

Les morceaux d'aliments découpés lors de l'étape de fragmentation peuvent ainsi être recueillis dans la chambre de réception 72 sans risque de bourrage limitant les performances d'extraction. L'étape de fragmentation peut être une étape de fragmentation calibrée, lorsque les passages traversants 35 présentent des dimensions sensiblement identiques. L'étape ultérieure de pressage entre l'organe de pressage 40 et la paroi filtrante 51 utilise les morceaux d'aliments découpés évacués dans la chambre de réception 72, pour extraire du jus et/ou du coulis à partir des morceaux d'aliments découpés.

De manière préférée, le procédé d'extraction de jus et/ou de coulis d'aliments consiste à utiliser l'enceinte de travail 70 contenant l'outil de découpe 30, l'organe de pressage 40 et la paroi filtrante 51, pour confiner les morceaux d'aliments découpés avant l'étape ultérieure de pressage. L'enceinte de travail 70 présente l'ouverture d'alimentation 27 débouchant en regard de l'outil de découpe 30, ainsi que la sortie d'écoulement 61 agencée en aval de la paroi filtrante 51.

De manière préférée, le procédé d'extraction de jus et/ou de coulis d'aliments consiste à utiliser l'ouverture d'alimentation 27 agencée de manière décentrée par rapport à l'axe de rotation de l'outil de découpe 30 animé d'un mouvement de rotation.

Avantageusement, le procédé d'extraction de jus et/ou de coulis d'aliments consiste à utiliser le tambour de découpe 39 formé par l'outil de découpe 30 pour réaliser l'étape de fragmentation, le tambour de découpe 39 étant animé d'un mouvement de rotation et comportant plusieurs organes de découpe 34 chacun adjacent à un des passages traversants 35, pour recevoir les morceaux d'aliments découpés à l'intérieur du tambour de découpe 39.

Avantageusement encore, le procédé d'extraction de jus et/ou de coulis d'aliments consiste à utiliser l'organe de raclage 80 agencé au moins partiellement à l'intérieur du tambour de découpe 39, pour diriger au moins une partie des morceaux d'aliments découpés vers l'organe de pressage 40.

Avantageusement encore, le procédé d'extraction de jus et/ou de coulis d'aliments consiste à agencer l'organe de pressage 40 en aval d'une ouverture de déversement 36 du tambour de découpe 39.

Selon une forme de réalisation, le procédé d'extraction de jus et/ou de coulis d'aliments consiste à utiliser au moins une pale de pressage 42 animée d'un mouvement relatif de rotation et/ou d'un mouvement relatif alternatif par rapport à la paroi filtrante 51 pour réaliser l'étape ultérieure de pressage en pressant les morceaux d'aliments découpés contre la paroi filtrante 51 et extraire du jus et/ou du coulis.

Selon une forme de réalisation préférée, le procédé d'extraction de jus et/ou de coulis d'aliments consiste à entraîner de manière synchrone l'outil de découpe 30 et l'organe de pressage 40. De préférence l'organe de pressage 40 est entraîné par l'outil de découpe 30, ou vice-versa.

Le dispositif d'extraction de jus et/ou de coulis d'aliments 2 illustré sur les figures 1 à 7 est spécialement conçu pour la mise en oeuvre du procédé précité.

Ainsi le procédé d'extraction de jus et/ou de coulis d'aliments précité concerne également un procédé de mise en oeuvre d'un dispositif d'extraction de jus et/ou de coulis d'aliments.

Le dispositif d'extraction de jus et/ou de coulis d'aliments 2 selon l'invention illustré sur les figures 1 à 7 fonctionne et s'utilise de la manière suivante.

L'utilisateur monte le boîtier 20 sur une base motorisée pour entraîner en rotation l'organe de transmission 25. L'utilisateur met en place l'outil de découpe 30 dans le logement 21, monte l'organe de pressage 40 sur l'outil de découpe 30, monte l'organe de filtration 50 sur le boîtier 20 autour de l'organe de pressage 40 et monte le déflecteur 60 sur le boîtier 20 autour de l'organe de filtration 50. L'utilisateur peut alors mettre en marche la base motorisée pour entraîner en rotation l'outil de découpe 30 et l'organe de pressage 40, et introduire les aliments à presser dans la cheminée 23. Le poussoir 24 peut être déplacé dans la cheminée 23 pour pousser les aliments vers l'outil de découpe 30. Les aliments sont ainsi progressivement fragmentés par l'outil de découpe 30. Les morceaux d'aliments découpés sont recueillis dans la chambre de réception 72. Selon l'aliment utilisé, ces morceaux d'aliments découpés peuvent présenter une consistance encore solide, ou plutôt pulpeuse. Du jus et/ou du coulis peut s'écouler dans la chambre de réception 72. Au moins une partie du jus et/ou du coulis peut s'écouler hors de la chambre de réception 72 par les passages traversants 35 inférieurs ou la partie inférieure de la paroi filtrante 51 en étant recueillie dans l'enceinte de travail 70. Les morceaux d'aliments découpés présents dans la chambre de réception 72 sont pressés entre l'organe de pressage 40 et la paroi filtrante 51 pour obtenir du jus et/ou du coulis. Le jus et/ou le coulis ainsi obtenu s'écoule hors de la chambre de réception 72 par la paroi filtrante 51. Le jus et/ou le coulis contenu dans l'enceinte de travail 70 s'écoule par la sortie d'écoulement 61. L'utilisateur peut ensuite retirer le déflecteur 60, l'organe de filtration 50 et l'organe de pressage 40 pour retirer les éventuels résidus.

Si désiré, plusieurs organes de filtration 50 interchangeables peuvent être prévus. En alternative, l'organe de filtration 50 peut comporter au moins une paroi filtrante 51 présentant des parties filtrantes interchangeables, et/ou plusieurs portions de paroi filtrante 51 pouvant être obturées sélectivement et/ou être positionnées sélectivement en regard de la sortie d'écoulement 61.

Dans l'exemple de réalisation illustré sur les figures, le déflecteur 60 est monté sur le boîtier 20. Le déflecteur 60 est ainsi porté directement par le boîtier 20. A titre de variante, le déflecteur 60 pourrait être porté indirectement par le boîtier 20. Notamment, l'organe de filtration 50 pourrait être monté sur le boîtier 20, le déflecteur 60 étant monté sur l'organe de filtration 50.

Dans l'exemple de réalisation illustré sur les figures, l'organe de filtration 50 est monté dans le logement 21 du boîtier 20. L'organe de filtration 50 est ainsi porté directement par le boîtier 20. A titre de variante, l'organe de filtration 50 pourrait notamment être porté par le déflecteur 60. A titre de variante encore, le déflecteur 60 pourrait être issu de l'organe de filtration 50.

A titre de variante, l'outil de découpe 30 animé d'un mouvement de rotation ne forme pas nécessairement un tambour de découpe 39. L'outil de découpe 30 peut notamment former un disque de coupe comportant un moyen d'entraînement en rotation 33.

A titre de variante, le dispositif d'extraction de jus et/ou de coulis d'aliments 2 ne comporte pas nécessairement un outil de découpe 30 animé d'un mouvement de rotation. Le dispositif d'extraction de jus et/ou de coulis d'aliments 2 peut notamment comporter un outil de découpe 30 animé d'un mouvement de rotation et/ou d'un mouvement alternatif, notamment d'un mouvement alternatif rectiligne.

A titre de variante, le dispositif d'extraction de jus et/ou de coulis d'aliments 2 ne comporte pas nécessairement un organe de pressage 40 mobile en rotation par rapport à un organe de filtration 50 monté fixe dans le boîtier 20. L'organe de pressage 40 et l'organe de filtration 50 peuvent être animés d'un mouvement relatif de rotation et/ou d'un mouvement relatif alternatif, notamment d'un mouvement alternatif rectiligne.

A titre de variante, l'organe de pressage 40 n'est pas nécessairement porté par l'outil de découpe 30. L'organe de pressage 40 peut notamment être guidé en rotation par l'organe de filtration 50.

A titre de variante, l'organe de pressage 40 n'est pas nécessairement entraîné par l'outil de découpe 30. L'organe de pressage 40 et l'organe de filtration 50 sont animés d'un mouvement relatif, notamment rotatif et/ou d'un mouvement alternatif. Si désiré, l'outil de découpe 30 peut être entraîné par l'organe de pressage 40 mis en mouvement par une motorisation intégrée ou non au dispositif d'extraction de jus et/ou de coulis d'aliments 2. En alternative, l'organe de pressage 40 et l'outil de découpe 30 peuvent être entraînés de manière indépendante. En alternative ou en complément, l'organe de filtration 50 peut être entraîné par rapport au boîtier 20, de manière indépendante ou non par rapport à l'outil de découpe 30, l'organe de pressage 40 pouvant être entraîné ou non par rapport au boîtier 20.

La présente invention n'est nullement limitée à l'exemple de réalisation décrit, mais englobe de nombreuses modifications dans le cadre des revendications.

## Revendications

1. Procédé d'extraction de jus et/ou de coulis d'aliments, **caractérisé en ce qu'**il comprend les étapes suivantes :
- une étape de fragmentation consistant à râper ou effiler des aliments avec un outil de découpe (30) animé d'un mouvement de rotation et/ou d'un mouvement alternatif, l'outil de découpe (30) comportant une face de coupe (32) présentant plusieurs organes de découpe (34), l'outil de découpe (30) présentant plusieurs passages traversants (35) débouchant dans une chambre de réception (72), pour évacuer les morceaux d'aliments découpés dans la chambre de réception (72), chacun des organes de découpe (34) étant adjacent à un des passages traversants (35),
- une étape ultérieure de pressage des morceaux d'aliments découpés entre un organe de pressage (40) et une paroi filtrante (51) agencés dans la chambre de réception (72), l'organe de pressage (40) et la paroi filtrante (51) étant animés d'un mouvement relatif de rotation et/ou d'un mouvement relatif alternatif, pour extraire du jus et/ou du coulis à partir des morceaux d'aliments découpés.

2. Procédé d'extraction de jus et/ou de coulis d'aliments selon la revendication 1, **caractérisé en ce que** l'étape ultérieure de pressage entre l'organe de pressage (40) et la paroi filtrante (51) utilise les morceaux d'aliments découpés évacués dans la chambre de réception (72), pour extraire du jus et/ou du coulis à partir des morceaux d'aliments découpés.

3. Procédé d'extraction de jus et/ou de coulis d'aliments selon l'une des revendications 1 ou 2, **caractérisé en ce qu'**il consiste à utiliser une enceinte de travail (70) contenant l'outil de découpe (30), l'organe de pressage (40) et la paroi filtrante (51), pour confiner les morceaux d'aliments découpés avant l'étape ultérieure de pressage, l'enceinte de travail (70) présentant une ouverture d'alimentation (27) débouchant en regard de l'outil de découpe (30), ainsi qu'une sortie d'écoulement (61) agencée en aval de la paroi filtrante (51).

4. Procédé d'extraction de jus et/ou de coulis d'aliments selon l'une des revendications 1 à 3, **caractérisé en ce qu'**il consiste à utiliser un tambour de découpe (39) animé d'un mouvement de rotation pour réaliser l'étape de fragmentation, le tambour de découpe (39) comportant plusieurs organes de découpe (34) adjacents chacun à un des passages traversants (35), pour recevoir les morceaux d'aliments découpés à l'intérieur du tambour de découpe (39).

5. Procédé d'extraction de jus et/ou de coulis d'aliments selon la revendication 4, **caractérisé en ce qu'**il consiste à utiliser un organe de raclage (80) agencé au moins partiellement à l'intérieur du tambour de découpe (39), pour diriger au moins une partie des morceaux d'aliments découpés vers l'organe de pressage (40).

6. Procédé d'extraction de jus et/ou de coulis d'aliments selon l'une des revendications 4 ou 5, **caractérisé en ce qu'**il consiste à agencer l'organe de pressage (40) en aval d'une ouverture de déversement (36) du tambour de découpe (39).

7. Procédé d'extraction de jus et/ou de coulis d'aliments selon l'une des revendications 1 à 6, **caractérisé en ce qu'**il consiste à utiliser au moins une pale de pressage (42) animée d'un mouvement relatif de rotation et/ou d'un mouvement relatif alternatif par rapport à la paroi filtrante (51) pour réaliser l'étape ultérieure de pressage en pressant les morceaux d'aliments découpés contre la paroi filtrante (51) et extraire du jus et/ou du coulis.

8. Procédé d'extraction de jus et/ou de coulis d'aliments selon l'une des revendications 1 à 7, **caractérisé en ce qu'**il consiste à entraîner de manière synchrone l'outil de découpe (30) et l'organe de pressage (40).

9. Dispositif d'extraction de jus et/ou de coulis d'aliments, comportant une ouverture d'alimentation (27) pour introduire les aliments à transformer, **caractérisé en ce qu'**il comporte :
- un outil de découpe (30) animé d'un mouvement de rotation et/ou d'un mouvement alternatif, comportant une face de coupe (32) présentant des organes de découpe (34) adjacents chacun à un passage traversant (35), plusieurs organes de découpe (34) évoluant simultanément en regard de l'ouverture d'alimentation (27), les passages traversants (35) débouchant dans une chambre de réception (72), pour recueillir les morceaux d'aliments découpés,
- une paroi filtrante (51) délimitant au moins partiellement la chambre de réception (72),
- un organe de pressage (40) agencé dans la chambre de réception (72) en regard de la paroi filtrante (51), l'organe de pressage (40) et la paroi filtrante (51) étant animés d'un mouvement relatif de rotation et/ou d'un mouvement relatif alternatif, pour presser les morceaux d'aliments découpés contre la paroi filtrante (51) et extraire du jus et/ou du coulis.

10. Dispositif d'extraction de jus et/ou de coulis d'aliments selon la revendication 9, **caractérisé en ce que** la paroi filtrante (51) s'étend au moins dans une partie inférieure de la chambre de réception (72).

11. Dispositif d'extraction de jus et/ou de coulis d'aliments selon l'une des revendications 9 ou 10, **caractérisé en ce que** l'organe de pressage (40) comporte au moins une pale de pressage (42) pour presser les morceaux d'aliments découpés contre la paroi filtrante (51), pour obtenir des jus et/ou des coulis.

12. Dispositif d'extraction de jus et/ou de coulis d'aliments selon la revendication 11, **caractérisé en ce que** l'organe de pressage (40) et la paroi filtrante (51) sont animés d'un mouvement relatif de rotation et **en ce que** la paroi filtrante (51) s'étend de manière circonférentielle autour de l'organe de pressage (40).

13. Dispositif d'extraction de jus et/ou de coulis d'aliments selon l'une des revendications 9 à 12, **caractérisé en ce que** l'outil de découpe (30) est animé d'un mouvement de rotation et forme un tambour de découpe (39) déversant vers au moins une portion de la paroi filtrante (51).

14. Dispositif d'extraction de jus et/ou de coulis d'aliments selon la revendication 13 **caractérisé en ce qu'**il comporte un organe de raclage (80) s'étendant à l'intérieur du tambour de découpe (39).

15. Dispositif d'extraction de jus et/ou de coulis d'aliments selon l'une des revendications 9 à 14, **caractérisé en ce que** l'ouverture d'alimentation (27) est ménagée dans une cheminée (23) et **en ce que** le dispositif d'extraction de jus et/ou de coulis d'aliments comporte un poussoir (24) monté mobile dans la cheminée (23).

16. Dispositif d'extraction de jus et/ou de coulis d'aliments selon l'une des revendications 9 à 15, **caractérisé en ce que** les organes de découpe (34) sont proéminents par rapport à la face de coupe (32).

17. Dispositif d'extraction de jus et/ou de coulis d'aliments selon l'une des revendications 9 à 16, **caractérisé en ce qu'**il est spécialement conçu pour la mise en oeuvre du procédé selon l'une des revendications 1 à 8.

## Patentansprüche

1. Verfahren zum Extrahieren von Saft und / oder Püree aus Nahrungsmitteln, **dadurch gekennzeichnet, dass** es die folgenden Schritte umfasst:
- einen Fragmentierungsschritt, der darin besteht, Nahrungsmittel mit einem Schneidwerkzeug (30) zu zerreiben oder zu zerfasern, das durch eine Drehbewegung und / oder eine Hin- und Herbewegung in Schwung gebracht wird, wobei das Schneidwerkzeug (30) eine Schneidfläche (32) aufweist, die mehrere Schneidelemente (34) vorweist, wobei das Schneidwerkzeug (30) mehrere durchgehende Gänge (35) vorweist, die in einer Aufnahmekammer (72) münden, um geschnittene Nahrungsmittelstücke in die Aufnahmekammer (72) abzutransportieren, wobei jedes Schneidelement (34) benachbart zu einem der durchgehenden Gänge (35) liegt;
- einen nachfolgenden Schritt zum Pressen von geschnittenen Nahrungsmittelstücken zwischen einem Presselement (40) und einer Filterwand (51), die in der Aufnahmekammer (72) angeordnet ist, wobei das Presselement (40) und die Filterwand (51) in eine relative Drehbewegung und / oder eine relative Hin- und Herbewegung in Schwung gebracht werden, um Saft und / oder Püree aus den geschnittenen Nahrungsmittelstücken zu extrahieren.

2. Verfahren zum Extrahieren von Saft und / oder Püree aus Nahrungsmitteln nach Anspruch 1, **dadurch gekennzeichnet, dass** der nachfolgende Schritt zum Pressen zwischen einem Presselement (40) und einer Filterwand (51) geschnittene Nahrungsmittelstücke verwendet, die in die Aufnahmekammer (72) abtransportiert werden, um Saft oder Püree aus geschnittenen Nahrungsmittelstücken zu extrahieren.

3. Verfahren zum Extrahieren von Saft und / oder Püree aus Nahrungsmitteln nach Anspruch 1 oder 2, **dadurch gekennzeichnet, dass** es darin besteht, eine Arbeitskammer (70) zu verwenden, die das Schneidwerkzeug (30), das Presselement, (40) und die Filterwand (51) enthält, um die geschnittenen Nahrungsmittelstücke vor dem nachfolgenden Pressschritt einzuschließen, wobei die Arbeitskammer (70) eine Zufuhröffnung (27), die gegenüber dem Schneidwerkzeug (30) mündet, sowie einen Strömungsauslass (61) vorweist, der stromabwärts von der Filterwand (51) angeordnet ist.

4. Verfahren zum Extrahieren von Saft und / oder Püree aus Nahrungsmitteln nach einem der Ansprüche 1 bis 3, **dadurch gekennzeichnet, dass** es darin besteht, eine Schneidtrommel (39) zu verwenden, die durch eine Drehbewegung in Schwung gebracht wird, um den Fragmentierungsschritt zu realisieren, wobei die Schneidtrommel (39) mehrere Schneidelemente (34) aufweist, die jeweils benachbart zu einem der durchgehenden Gänge (35) liegen, um geschnittene Nahrungsmittelstücke im Inneren der Schneidtrommel (39) aufzunehmen.

5. Verfahren zum Extrahieren von Saft und / oder Püree aus Nahrungsmitteln nach Anspruch 4, **dadurch gekennzeichnet, dass** es darin besteht, ein Abstreifelement (80) zu verwenden, das zumindest teilweise im Inneren der Schneidtrommel (39) angeordnet ist, um mindestens einen Teil der geschnittenen Nahrungsmittelstücke zu dem Presselement (40) zu leiten.

6. Verfahren zum Extrahieren von Saft und / oder Püree aus Nahrungsmitteln nach einem der Ansprüche 4 oder 5, **dadurch gekennzeichnet, dass** es darin besteht, das Presselement (40) stromabwärts einer Auslassöffnung (36) der Schneidtrommel (39) anzuordnen.

7. Verfahren zum Extrahieren von Saft und / oder Püree aus Nahrungsmitteln nach einem der Ansprüche 1 bis 6, **dadurch gekennzeichnet, dass** es darin besteht, mindestens ein Pressblatt (42) zu verwenden, das durch eine relative Drehbewegung und / oder eine relative Hin- und Herbewegung in Bezug auf die Filterwand (51) in Schwung gebracht wird, um den nachfolgenden Pressschritt durchzuführen, indem die geschnittenen Nahrungsmittelstücke gegen die Filterwand (51) gepresst werden und Saft und / oder Püree extrahiert werden.

8. Verfahren zum Extrahieren von Saft und / oder Püree aus Nahrungsmitteln nach einem der Ansprüche 1 bis 7, **dadurch gekennzeichnet, dass** es darin besteht, das Schneidwerkzeug (30) und das Presselement (40) synchron anzutreiben.

9. Vorrichtung zum Extrahieren von Saft und / oder Püree aus Nahrungsmitteln, aufweisend eine Zufuhröffnung (27) zum Einführen der zu verarbeitenden Nahrungsmittel, **dadurch gekennzeichnet, dass** sie aufweist:
- ein Schneidwerkzeug (30), das durch eine Drehbewegung und / oder eine Hin- und Herbewegung in Schwung gebracht wird, das eine Schneidfläche (32) aufweist, die Schneidelemente (34) vorweist, die jeweils benachbart zu einem durchgehenden Gang (35) liegen, wobei sich mehrere Schneidelemente (34) gleichzeitig gegenüber der Zufuhröffnung (27) bewegen, wobei die durchgehenden Gänge (35) in einer Aufnahmekammer (72) zum Sammeln von geschnittenen Nahrungsmittelstücken münden,
- eine Filterwand (51), die die Aufnahmekammer (72) zumindest teilweise begrenzt,
- ein Presselement (40), das in der Aufnahmekammer (72) gegenüber der Filterwand (51) angeordnet ist, wobei das Presselement (40) und die Filterwand (51) durch eine relative Drehbewegung und / oder eine Hin- und Herbewegung in Schwung gebracht werden, um die geschnittenen Nahrungsmittelstücke gegen die Filterwand (51) zu pressen und Saft und / oder Püree zu extrahieren.

10. Vorrichtung zum Extrahieren von Saft und / oder Püree aus Nahrungsmitteln nach Anspruch 9, **dadurch gekennzeichnet, dass** sich die Filterwand (51) mindestens in einem unteren Teil der Aufnahmekammer (72) erstreckt.

11. Vorrichtung zum Extrahieren von Saft und / oder Püree aus Nahrungsmitteln nach einem der Ansprüche 9 oder 10, **dadurch gekennzeichnet, dass** das Presselement (40) mindestens ein Pressblatt (42) zum Pressen der geschnittenen Nahrungsmittelstücke gegen die Filterwand (51) aufweist, um Säfte und / oder Pürees zu erhalten.

12. Vorrichtung zum Extrahieren von Saft und / oder Püree aus Nahrungsmitteln nach Anspruch 11, **dadurch gekennzeichnet, dass** das Presselement (40) und die Filterwand (51) durch eine relative Drehbewegung in Schwung gebracht werden, und dass sich die Filterwand (51) in Umfangsrichtung um das Druckelement (40) erstreckt.

13. Vorrichtung zum Extrahieren von Saft und / oder Püree aus Nahrungsmitteln nach einem der Ansprüche 9 bis 12, **dadurch gekennzeichnet, dass** das Schneidwerkzeug (30) durch eine Drehbewegung in Schwung gebracht wird und eine Schneidtrommel (39) bildet, die an mindestens einem Abschnitt der Filterwand (51) entleert wird.

14. Vorrichtung zum Extrahieren von Saft und / oder Püree aus Nahrungsmitteln nach Anspruch 13, **dadurch gekennzeichnet, dass** sie ein Abstreifelement (80) aufweist, das sich im Inneren der Schneidtrommel (39) erstreckt.

15. Vorrichtung zum Extrahieren von Saft und / oder Püree aus Nahrungsmitteln nach einem der Ansprüche 9 bis 14, **dadurch gekennzeichnet, dass** die Zufuhröffnung (27) in einem Schacht (23) ausgebildet ist, und dass die Vorrichtung zum Extrahieren von Saft und / oder Püree aus Nahrungsmitteln einen Schieber (24) aufweist, der beweglich in dem Schacht (23) angebracht ist.

16. Vorrichtung zum Extrahieren von Saft und / oder Püree aus Nahrungsmitteln nach einem der Ansprüche 9 bis 15, **dadurch gekennzeichnet, dass** die Schneidelemente (34) in Bezug auf die Schneidfläche (32) vorstehen.

17. Vorrichtung zur Extraktion von Saft und / oder Püree aus Nahrungsmitteln nach einem der Ansprüche 9 bis 16, **dadurch gekennzeichnet, dass** sie speziell für die Durchführung des Verfahrens nach einem der Ansprüche 1 bis 8 ausgelegt ist.

## Claims

1. Method for extracting juice or sauce from food, **characterised in that** it comprises the following steps:
- a fragmentation step consisting of grating or shredding food with a cutting tool (30) moved by a rotation movement and/or an alternative movement, the cutting tool (30) comprising a cutting face (32) having several cutting members (34), the cutting tool (30) having several through passages (35) leading to a reception chamber (72), to release the cut food pieces into the reception chamber (72), each of the cutting members (34) being adjacent to one of the through passages (35),
- a later step of pressing cut food pieces between a pressing member (40) and a filtering wall (51) arranged in the reception chamber (72), the pressing member (40) and the filtering wall (51) being moved by a relative rotation movement and/or a relative alternative movement, to extract the juice and/or the sauce from the cut food pieces.

2. Method for extracting juice and/or sauce from food according to claim 1, **characterised in that** the later step of pressing between the pressing member (40) and the filtering wall (51) uses the cut food pieces released into the reception chamber (72), to extract the juice and/or the sauce from the cut food pieces.

3. Method for extracting juice and/or sauce from food according to one of claims 1 or 2, **characterised in that** it consists of using a work chamber (70) containing the cutting tool (30), the pressing member (40) and the filtering wall (51), to confine the cut food pieces before the later pressing step, the work chamber (70) having a supply opening (27) leading to facing the cutting tool (30), as well as a drain outlet (61) arranged downstream of the filtering wall (51).

4. Method for extracting juice and/or sauce from food according to one of claims 1 to 3, **characterised in that** it consists of using a cutting drum (39) moved by a rotation movement to carry out the fragmentation step, the cutting drum (39) comprising several adjacent cutting members (34) each at one of the through passages (35), to receive the cut food pieces inside the cutting drum (39).

5. Method for extracting juice and/or sauce from food according to claim 4, **characterised in that** it consists of using a scraping member (80) arranged at least partially inside the cutting drum (39), to direct at least some of the cut food pieces towards the pressing member (40).

6. Method for extracting juice and/or sauce from food according to one of claims 4 or 5, **characterised in that** it consists of arranging the pressing member (40) downstream of a discharge opening (36) of the cutting drum (39).

7. Method for extracting juice and/or sauce from food according to one of claims 1 to 6, **characterised in that** it consists of using at least one pressing blade (42) moved by a relative rotation movement and/or a relative alternative movement with respect to the filtering wall (51) to carry out the later pressing step by pressing the cut food pieces against the filtering wall (51) to extract the juice and/or the sauce.

8. Method for extracting juice and/or sauce from food according to one of claims 1 to 7, **characterised in that** it consists of synchronously driving the cutting tool (30) and the pressing member (40).

9. Device for extracting juice and/or sauce from food, comprising a supply opening (27) to introduce the food to be transformed, **characterised in that** it comprises:
- a cutting tool (30) moved by a rotation movement and/or an alternative movement, comprising a cutting face (32) having adjacent cutting members (34) each to a through passage (35), several cutting members (34) simultaneously moving facing the supply opening (27), the through passages (35) leading to a reception chamber (72), for collecting cut food pieces,
- a filtering wall (51) delimiting at least partially the reception chamber (72),
- a pressing member (40) arranged in the reception chamber (72) facing the filtering wall (51), the pressing member (40) and the filtering wall (51) being moved by a relative rotation movement and/or a relative alternative movement, to press the cut food pieces against the filtering wall (51) and to extract the juice and/or the sauce.

10. Device for extracting juice and/or sauce from food according to claim 9, **characterised in that** the filtering wall (51) extends at least into a lower part of the reception chamber (72).

11. Device for extracting juice and/or sauce from food according to one of claims 9 or 10, **characterised in that** the pressing member (40) comprises at least one pressing blade (42) to press the cut food pieces against the filtering wall (51), to obtain juice and/or sauce.

12. Device for extracting juice and/or sauce from food according to claim 11, **characterised in that** the pressing member (40) and the filtering wall (51) are moved by a relative rotation movement and **in that** the filtering wall (51) extends circumferentially around the pressing member (40).

13. Device for extracting juice and/or sauce from food according to one of claims 9 to 12, **characterised in that** the cutting tool (30) is moved by a rotation movement and forms a cutting drum (39) discharging towards at least one portion of the filtering wall (51).

14. Device for extracting juice and/or sauce from food according to claim 13, **characterised in that** it comprises a scraping member (80) extending inside the cutting drum (39).

15. Device for extracting juice and/or sauce from food according to one of claims 9 to 14, **characterised in that** the supply opening (27) is arranged in a funnel (23) and **in that** the device for extracting juice and/or sauce from food comprises a push-button (24) mounted mobile in the funnel (23).

16. Device for extracting juice and/or sauce from food according to one of claims 9 to 15, **characterised in that** the cutting members (34) are protruding with respect to the cutting face (32).

17. Device for extracting juice and/or sauce from food according to one of claims 9 to 16, **characterised in that** it is particularly designed for the implementation of the method according to one of claims 1 to 8.
